# EUROPEAN PATENT SPECIFICATION

(11) **EP 3 883 717 B1**
(45) Date of publication and mention of the grant of the patent: **28.10.2026**
(21) Application number: 19818422.8
(22) Date of filing: 19.11.2019
(51) Int. Cl.: B23K 10/00, H05H 1/36

(54) **METHODS FOR DETERMINING A PLURALITY OF OPERATING PARAMETERS TO PROCESS A WORKPIECE**
VERFAHREN ZUR BESTIMMUNG EINER VIELZAHL VON BETRIEBSPARAMETERN FÜR DIE BEARBEITUNG EINES WERKSTÜCKS
MÉTHODES DE DÉTERMINATION DE PLUSIEURS PARAMÈTRES DE FONCTIONNEMENT POUR LE TRAITEMENT D'UNE PIÈCE

(30) Priority: 20.11.2018 US 201862769655 P
(43) Date of publication of application: 29.09.2021
(60) Divisional application: 26205906.6
(73) Proprietor: Hypertherm, INC., Hanover NH 03755 (US)
(72) Inventor: LINDSAY, Jon, W., Hanover, NH 03755 (US); GULLOTTA, Justin, Hanover, NH 03755 (US); HIGGENS, Martin, Hanover, NH 03755 (US)
(74) Representative: Barker Brettell LLP
(86) International application number: PCT/US2019/062231
(87) International publication number: WO 2020/106730

(56) References cited:
- JP-A- H11 216 571
- DATABASE WPI Week 197638, Derwent World Patents Index; AN 1976-71733X, XP002798134
- DATABASE WPI Week 197615, Derwent World Patents Index; AN 1976-27750X, XP002798135
- DATABASE WPI Week 198206, Derwent World Patents Index; AN 1982-11435E, XP002798136
- ALBAN J F: "Revival of a Lost Art: Plasma Arc Gouging of Aluminum", WELDING JOURNAL SUPPL. WELDING RESEARCH,, vol. 55, no. 10, 1 November 1976 (1976-11-01), pages 954 - 959, XP001341707
- TAKASHI HAMADA ET AL: "Development of automatic weld bead finishing system using plasma arc gouging", WELDING IN THE WORLD, vol. 58, no. 4, 1 July 2014 (2014-07-01), SPRINGER, pages 555 - 564, XP001590030, ISSN: 0043-2288, [retrieved on 20140514], DOI: 10.1007/S40194-014-0140-0
- GORKA J: "WELDING TECHNOLOGIES FOR THE REMOVAL OF DEFECTS IN WELDED JOINTS AND IRON-CASTINGS", WELDING INTERNATIONAL, vol. 16, no. 5, 1 January 2002 (2002-01-01), TAYLOR & FRANCIS, ABINGDON, GB, pages 341 - 346, XP001112869, ISSN: 0950-7116
- HEFLIN R L: "Plasma Arc Gouging of Aluminum", WELDING JOURNAL,, vol. 64, no. 5, 1 May 1985 (1985-05-01), pages 16 - 19, XP001341730

## Description

The present invention relates generally to manufacturing processing systems, including systems and methods for determining operating parameters of plasma gouging systems.

### BACKGROUND OF THE INVENTION

Many operators and technicians of manufacturing processing systems use gouging as a step in the process of accomplishing full penetration welds. For example, when welding two plates together at a joint, an operator normally welds one side of the joint using a series of weld passes before proceeding to the second side of the joint. However, the first weld passes nearest the center of the weld are exposed to atmosphere during welding, and as such need to be removed in order to eliminate weld deficiencies and improve the quality of the weld. After the exposed material has been removed, the operator can perform a series of weld passes on the second side in order to complete the welding of the joint between the two plates.

The current method of removing the exposed welding material is to apply gouging techniques to the second side of the joint such that the exposed welding material is removed along with portions of each plate. The gouging techniques (e.g., carbon arc or plasma arc) need to be performed in a consistent manner and with a desired shape across the joint in order to avoid voids when performing the welding on the second side of the joint. The particular geometry of the desired gouge depends on a number of factors including, among others, plate thickness, welder preferences, and design requirements. Often, the desired gouge geometry cannot be achieved with a single gouging pass; operators need to perform multiple gouging passes to approach the desired geometry. In practice, operators commonly use an inspection gage to insert in the gouge after each pass to see if enough material has been removed and the desired geometry achieved. As current gouging techniques are imprecise and remove varied large amounts of material which leave behind inconsistent surfaces, this trial and error approach is required. Once the gouge shape is close to the desired shape secondary machining (e.g., grinding) is required; this grinding commonly takes twice to three times as long to accomplish as the gouging process itself. This iterative process is imprecise, inefficient, and often takes hours to develop a proper gouge shape and profile for a single weld joint.

Therefore, there is a need to create a system which assists operators in defining a process recipe to achieve the desired gouging profile without requiring significant amounts of secondary machining and/or iteratively using an inspection gage after each gouging pass. This would allow operators to accomplish full penetration welds in an efficient manner using carbon arc gouging or plasma gouging solutions.

SU495176 (describing the preamble of claim 1) and SU449788 A show a method of multi-pass plasma-arc surface cutting. SU825298 B (describing the preamble of claim 10) shows a burner for plasma-arc cutting. JPH11216571A discloses a gouging method by high temperature and high speed airflow.

The applicant is also aware of:
- ALBAN J F, "Revival of a Lost Art: Plasma Arc Gouging of Aluminum", WELDING JOURNAL SUPPL. WELDING RESEARCH,, (19761101), vol. 55, no. 10, pages 954 - 959;
- TAKASHI HAMADA ET AL, "Development of automatic weld bead finishing system using plasma arc gouging", WELDING IN THE WORLD, SPRINGER, vol. 58, no. 4;
- GORKA J, "WELDING TECHNOLOGIES FOR THE REMOVAL OF DEFECTS IN WELDED JOINTS AND IRON-CASTINGS", WELDING INTERNATIONAL, TAYLOR & FRANCIS, ABINGDON, GB, (20020101), vol. 16, no. 5; and
- HEFLIN R L, "Plasma Arc Gouging of Aluminum", WELDING JOURNAL,, (19850501), vol. 64, no. 5, pages 16 - 19.

### SUMMARY OF THE INVENTION

Accordingly, an object of the invention is to provide information related to a manufacturing processing operation to an operator of a gouging torch system. It is an object of the invention to determine operating parameters to process a workpiece using a manufacturing processing system. It is an object of the invention to determine operating parameters to process a workpiece using a plasma arc gouging torch. It is an object of the invention to determine operating parameters for gouging passes on a workpiece based on a desired gouge profile and initial operating parameters of an initial gouging pass and/or manufacturing processing system capabilities.

The present invention provides methods for determining a plurality of operating parameters to process a workpiece as defined in claims 1 and 10 respectively. Preferred embodiments are defined in the dependent claims.

Other aspects and advantages of the invention can become apparent from the following drawings and description, all of which illustrate the principles of the invention, by way of example only.

### BRIEF DESCRIPTION OF THE DRAWINGS

The advantages of the invention described above, together with further advantages, may be better understood by referring to the following description taken in conjunction with the accompanying drawings. The drawings are not necessarily to scale, emphasis instead generally being placed upon illustrating the principles of the invention.
FIG. 1 is an isometric view of an exemplary gouging torch system, according to an embodiment of the invention.
FIG. 2A is a cross-section of an exemplary gouge in a workpiece processed using the exemplary gouging system shown in FIG. 1, according to an embodiment of the invention.
FIG. 2B is a top-down view of the exemplary gouge shown in FIG. 2A, according to an embodiment of the invention.
FIG. 3 is an illustrative representation of an exemplary inspection gage and multi-path gouge, according to an embodiment of the invention.
FIG. 4 is a block diagram of the exemplary gouging torch system shown in FIG. 1, according to an embodiment of the invention.
FIG. 5A is an illustrative cross-section of an exemplary symmetric multi-path gouge processed using the exemplary gouging system shown in FIG. 1, according to an embodiment of the invention.
FIG. 5B is an illustrative cross-section of an exemplary non-symmetric multi-path gouge processed using the exemplary gouging system shown in FIG. 1, according to an embodiment of the invention.
FIG. 6 is a flow diagram of method steps for determining operating parameters to process a workpiece using the exemplary gouging system shown in FIG. 1, according to an embodiment of the invention.
FIG. 7 is a flow diagram of method steps for determining operating parameters to process a workpiece using the exemplary gouging system shown in FIG. 1, according to an embodiment of the invention.
FIG. 8 is a flow diagram of method steps for determining operating parameters to process a workpiece using the exemplary gouging system shown in FIG. 1, according to an embodiment of the invention.

### DETAILED DESCRIPTION OF THE INVENTION

In plasma gouging, the shape of the resultant gouge from a given single gouging pass is influenced by many factors including torch speed, torch angularity, gas pressure settings, plasma system settings, consumable condition, etc. For example, varying torch speed can influence the depth and width of the trough (and thereby the shape/angularity of the trough walls) created from a given gouging pass. A slower gouging pass exposes a given location of the workpiece to the plasma arc for a longer time, creating a deeper trough, while a faster gouging pass exposes the given location of the workpiece to the plasma arc for a briefer period, resulting in a shallower trough. The systems and methods described herein provide automated solutions that leverage the flexibility and versatility of plasma systems during gouging processes to design and implement single-pass or multi-pass gouging of materials to efficiently obtain a desired and/or tailored large gouge shape and geometry.

In one aspect, a system receives inputs from an end user, such as the plasma system to be used, the pre-gouging geometry capabilities of the system as currently configured (e.g., gouging consumables installed, torch positioning, etc.), and the desired post-gouging geometry, in order to develop a gouging "recipe." The system uses process data for the plasma system, including single pass gouging cross-section data, to develop the recipe. The system can provide the end user or automated gouging system with the process information for each gouging pass, the gouging pass sequence, and the torch position for each gouging pass. The system can develop a recipe that creates a single-pass or multi-pass gouging shape that matches a gouging inspection gage for a given type of weld or desired gouge profile. The recipe positions multiple gouging passes at different speeds or varies the speed(s) of a single pass to create a shape that best matches the inspection gage. The recipe selects the speeds such that the gouging pass angles best match the desired gouging angle at each location.

In one embodiment, the system compensates for the interaction between gouging passes and implements best practices for laying out single or multiple gouging passes. For example, when overlap occurs between passes, there is influence between gouging passes further adjusting the resultant trough geometry. In one embodiment, the system varies or orders the gouge passes to accommodate for multi-pass influences (e.g., to minimize overlap, to anticipate and eliminate a peak forming between two gouge passes, etc.), anticipating and adjusting for this influence. The use and implementation of the systems and methods described herein eliminates the need for the trial and error techniques currently required and employed by end users. The systems and methods described herein automatically apply gouging process knowledge to create a variety of gouging shapes/troughs desired by end users.

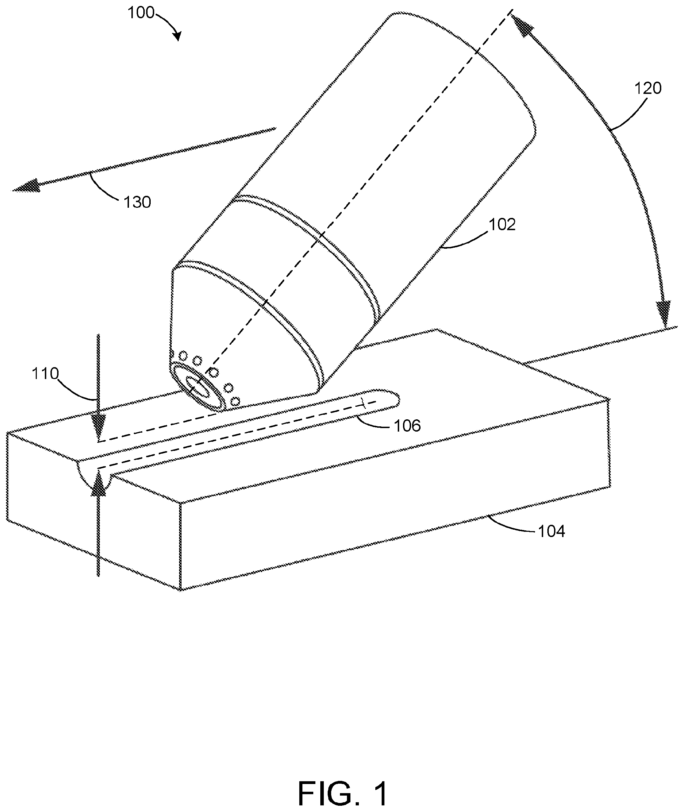

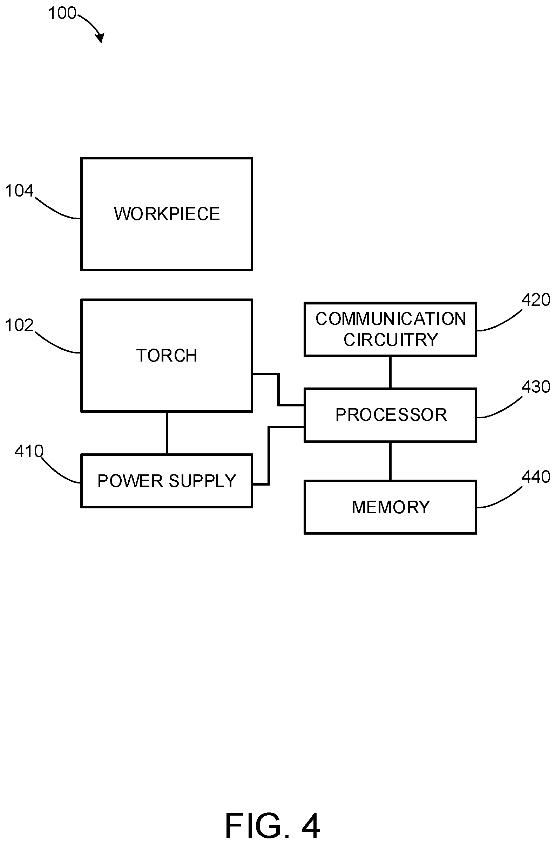

Referring to FIGS. 1-4, a gouging torch system 100 includes a workpiece 104 and a torch 102 that is configured to gouge the workpiece 104. The torch 102 is powered by a current and a voltage delivered by a power supply 410. In some embodiments, the gouging torch system 100 also includes processor 430, memory 440, and communication circuitry 420. In some embodiments, communication circuitry 420 of the gouging torch system 100 is configured to transfer data between the components of the gouging torch system 100 and between the gouging torch system 100 and other systems. Communication circuitry 420 can use Bluetooth, wired connection, Wi-Fi, or any comparable data transfer connection.

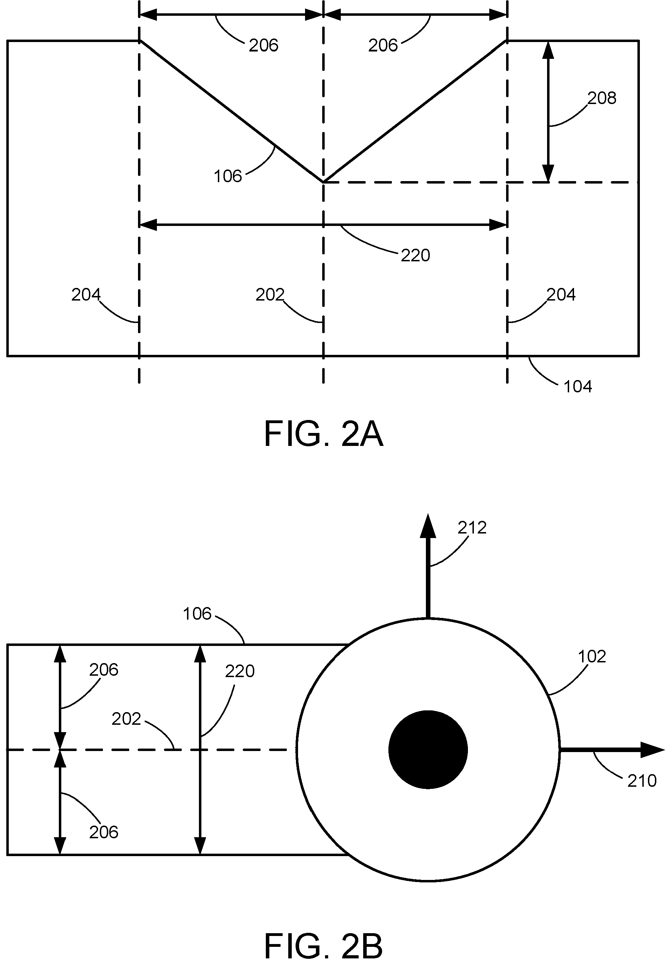

As shown in FIGS. 1, 2A, and 2B, the torch 102 is configured to create a gouge 106 in workpiece 104. The gouge 106 is divided by a center line 202, which corresponds to the path traversed by the center of torch 102 during the gouging process. The gouge 106 also includes gouge extremes 204, which correspond to the lateral extremes of the gouge 106 and are located at an arc distance 206 (e.g., one half a width of the single path gouge diameter/width 220) from the center line 202. The gouge 106 is defined by a gouge depth 208 and a gouge width 220. The shape, geometry, and properties of the created gouge 106 generally depend on a number of parameters. The main parameters include the standoff 110 between the torch 102 and the workpiece 104, the angle 120 between the torch 102 and the workpiece 104, the velocity 130 of the torch 102 with respect to the workpiece 104, and the current supplied to the torch 102 by the power supply 410. The velocity 130 of the torch includes an axial velocity 210 and a lateral velocity 212.

Assuming all other parameters remain constant, the effects of changing one of the parameters can be predicted. For example, increasing the axial velocity 210 of the torch 102 will decrease the width 220 and decrease the depth 208 of the gouge 106. Decreasing the axial velocity 210 of the torch 102 will increase the width 220 and increase the depth 208 of the gouge 106. On the other hand, changing the current supplied to the torch 102 by the power supply 410 has the opposite effect. For example, increasing the current supplied to the torch 102 by the power supply 410 will increase the width 220 and increase the depth 208 of the gouge 106. Decreasing the current supplied to the torch 102 by the power supply 410 will decrease the width 220 and decrease the depth 208 of the gouge 106.

With respect to changing the standoff 110 and angle 120 between the torch 102 and the workpiece 104, the effects on the width 220 of the gouge 106 is inversely proportional to the effects on the depth 208 of the gouge 106. For example, increasing the standoff 110 between the torch 102 and the workpiece 104 will increase the width 220 and decrease the depth 208 of the gouge 106. Decreasing the standoff 110 between the torch 102 and the workpiece 104 will decrease the width 220 and increase the depth 208 of the gouge 106. On the other hand, increasing the angle 120 between the torch 102 and the workpiece 104 will increase the width 220 and decrease the depth 208 of the gouge 106. Decreasing the angle 120 between the torch 102 and the workpiece 104 will decrease the width 220 and increase the depth 208 of the gouge.

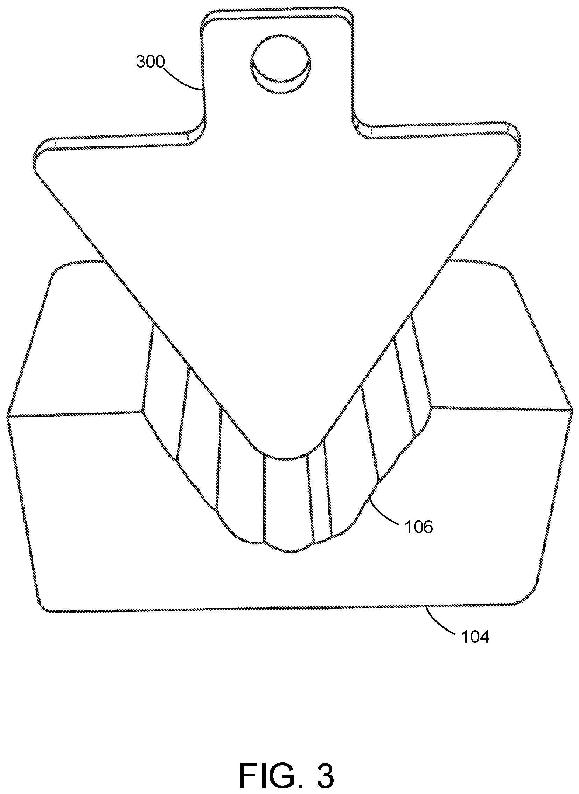

Despite the ability to control the depth 208 and width 220 of the gouge 106 using the above-described parameters, there exists a limit (e.g., maximum arc stretch) to the depth 208 and width 220 that can be achieved with a single pass of the torch 102. End users often use multiple passes to achieve a desired profile of the gouge 106. FIG. 3 shows an exemplary inspection gage 300 that is often used by end users to verify the profile of gouge 106 after multiple passes of the torch 102. When an end user uses the same parameters for every pass, the depth 208 achieved by the first pass is less than the depth 208 achieved by subsequent passes. This result is due to a change in the behavior of the workpiece/metal after the first pass as the dynamics of the process are changed for the second and any subsequent passes as the geometry of the workpiece and the metal about the gouge is changed with each pass. By modifying one or more operating parameters for the subsequent passes relative to the first pass, a substantially uniform gouge depth 208 and/or profile can be achieved.

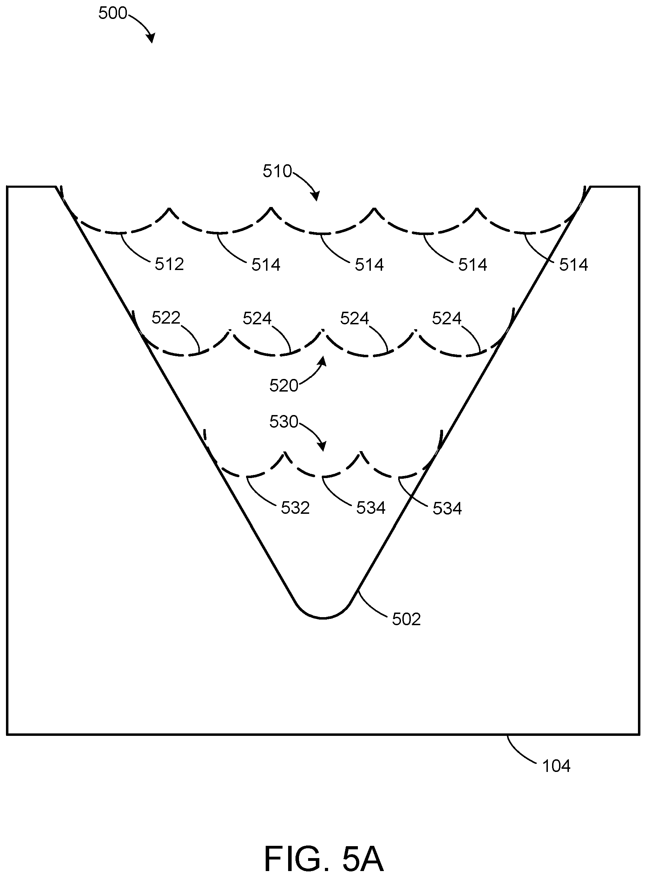

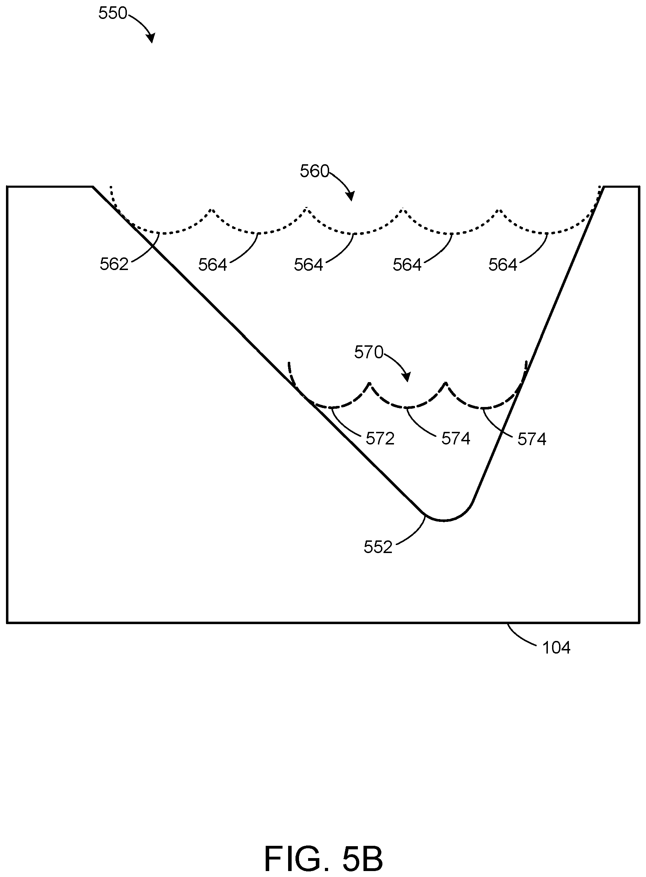

Referring to FIGS. 5A and 5B, exemplary multi-path gouges in a workpiece 104 are illustrated. FIG. 5A illustrates a symmetric multi-path gouge 500 while FIG. 5B illustrates a non-symmetric multi-path gouge 550. As shown in FIG. 5A, the symmetric multi-path gouge 500 illustrates example paths a gouging torch 102 needs to perform across multiple layers in order to achieve a desired symmetric gouge profile 502. For example, three gouging layers 510, 520, and 530 are illustrated. The first gouging layer 510 includes a first gouging path 512 and subsequent gouging paths 514. The second gouging layer 520 includes a first gouging path 522 and subsequent gouging paths 524. The third gouging layer 530 includes a first gouging path 532 and subsequent gouging paths 534. The total number of paths per layer decreases for every successive layer, reaching one path for the last gouging layer.

Similarly, as shown in FIG. 5B, the non-symmetric multi-path gouge 550 illustrates example paths a gouging torch 102 needs to perform across multiple layers in order to a achieve a desired non-symmetric gouge profile 552. For example, two gouging layers 560 and 570 are illustrated. The first gouging layer 560 includes a first gouging path 562 and subsequent gouging paths 564. The second gouging layer 570 includes a first gouging path 572 and subsequent gouging paths 574. The total number of paths per layer decreases for every successive layer, reaching one path for the last gouging layer.

Gouging torch system 100 can generate a process recipe that achieves the desired gouge profile 502 using multiple passes of the gouging torch 102. As mentioned above, at least one of the operating parameters of the subsequent gouging paths 514 is different compared to the operating parameters of the first gouging path 512 in order to achieve the same gouge depth 208. For example, by increasing the axial velocity 210 of the subsequent gouging paths 514 with respect to the axial velocity 210 of the first gouging path 512, the same gouge depth 208 can be achieved. In addition to increasing the axial velocity 210, other parameters of the subsequent gouging paths 514 an be adjusted as well. For example, by decreasing the current supplied to the torch 102 by the power supply 410 for the subsequent gouging paths 514 with respect to the current supplied to the torch 102 for the first gouging path 512, the same gouge depth 208 can be achieved. Similarly, by increasing the standoff 110 for the subsequent gouging paths 514 with respect to the standoff for the first gouging path 512, the same gouge depth 208 can be achieved. The same gouge depth 208 can also be achieved by increasing or decreasing the angle 120 between the torch 102 and the workpiece 104 for the subsequent gouging paths 514 with respect to the angle 120 for the first gouging path 512. In some embodiments, two or more parameters are adjusted between the first gouging path 512 and the subsequent gouging paths 514.

In addition to changing the operating parameters between passes, the operating parameters can also be adjusted between gouging layers. For example, in order to maintain the angle of the sides of the gouge 106 at a constant, the axial velocity 210 of the paths of the second gouging layer 520 can be less than the axial velocity 210 of the paths of the first gouging layer 510. Similarly, the axial velocity 210 of the paths of the third gouging layer 530 can be less than the axial velocity 210 of the paths of the second gouging layer 520. In some embodiments, the axial velocity 210 of the path of the last gouging layer is greater than the axial velocity 210 of the paths of all the other gouging layers in order to achieve large side angles at the bottom of the desired gouge profile 502.

In some embodiments, the offset distance between gouges and/or gouge layers can be varied. Generally, the offset distance between gouging paths is more than half of the gouge width 220, but less than the full gouge width 220. However, the offset distance needs to be set such that the correct top width of the gouge 106 is achieved during a gouging path. In some embodiments, the offset distance is greater than about 50% of the gouge width 220. In some embodiments, the offset distance is less than about 100% of the gouge width 220. In some embodiments, the offset distance is about 75% of the gouge width 220. In some embodiments, the offset distance is about 80% of the gouge width 220.

One example recipe of an exemplary multi-path gouge 500 can be as follows: assuming a constant torch angle 120 of about 32.5 degrees, the axial velocity 210 and the standoff 110 of the first gouging path 512 of the first gouging layer 510 can be about 1.05 cm per second (25 inches per minute (ipm)) and about 1.699 cm (0.669 inches (in)), respectively, and the axial velocity 210 and the standoff 110 of the subsequent gouging paths 514 of the first gouging layer 510 can be about 1.40 cm per second (33 ipm) and about 1.862 cm (0.733 in), respectively. The offset distance between the first gouging path 512 and the subsequent gouging paths 514 of the first gouging layer 510 can be about 0.8 cm (0.3 in). For the second gouging layer 520, the axial velocity 210 and the standoff 110 of the first gouging path 522 can be about 1.05 cm per second (25 ipm) and about 1.288 cm (0.507 in), respectively, while the axial velocity 210 and the standoff 110 of the subsequent gouging paths 524 can be about 1.40 cm per second (33 ipm) and about 1.450 cm (0.571 in), respectively. The offset distance between the first gouging path 522 and the subsequent gouging paths 524 of the second gouging layer 520 can be about 0.742 cm (0.292 in). The offset distance between the first gouging path 512 of the first gouging layer 510 and the first gouging path 522 of the second gouging layer 520 can be about 3.007 cm (1.184 in). For the third gouging layer 530, the axial velocity 210 and the standoff 110 of the first gouging path 532 can be about 0.95 cm per second (22.5 ipm) and about 0.803 cm (0.316 in), respectively, while the axial velocity 210 and the standoff 110 of the subsequent gouging paths 534 can be about 1.27 cm per second (30 ipm) and about 0.899 cm (0.354 in), respectively. The offset distance between the first gouging path 532 and the subsequent gouging paths 534 of the third gouging layer 530 can be about 0.650 cm (0.256 in). The offset distance between the first gouging path 512 of the first gouging layer 510 and the first gouging path 532 of the third gouging layer 530 can be about 0.224 cm (0.088 in). The axial velocity 210 and the standoff 110 of the path of the last gouging layer can be about 3.18 cm per second (75 ipm) and about -0.381 cm (-0.15 in), respectively.

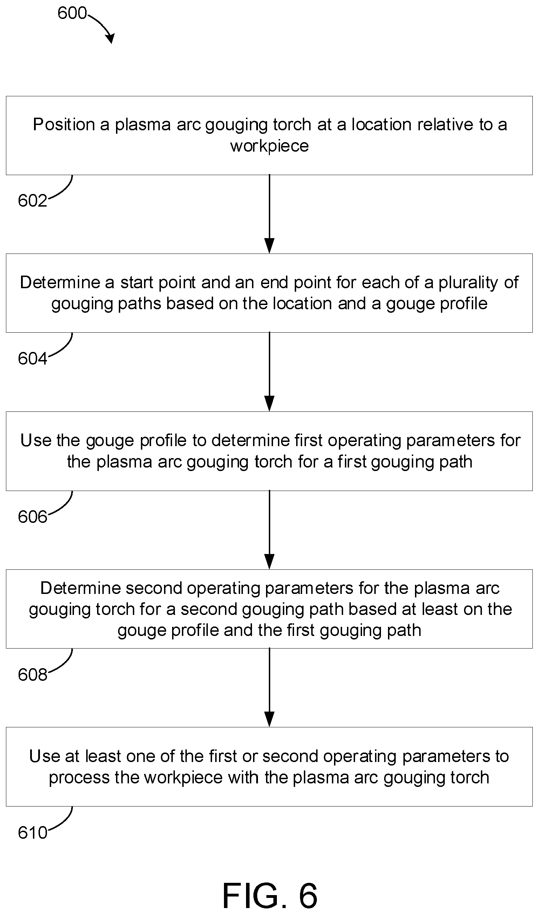

Referring to FIG. 6, a process 600 for determining operating parameters to process a workpiece 104 using a gouging torch system 100 comprising a plasma arc gouging torch 102 is illustrated. The process 600 begins by positioning a plasma arc gouging torch 102 at a location relative to a workpiece 104 in step 602. For example, the plasma arc gouging torch 102 can be positioned near the location of a desired gouge 106 on the workpiece 104. In some embodiments, process 600 begins by determining a start position for the plasma arc gouging torch 102 at a location relative to the workpiece 104. Process 600 continues by determining a start point and an end point for each of a plurality of gouging paths based on the location and a gouge profile 502 in step 604. For example, the gouging torch system 100 can determine a start point and an end point for a first gouging path 512 and a start point and an end point for each subsequent path 514. In some embodiments, processor 430 of the gouging torch system 100 calculates the start point and the end point for each of the gouging paths based on the location and the desired gouge profile 502.

Process 600 continues by using the gouge profile 502 to determine first operating parameters for the plasma arc gouging torch 102 for a first gouging path 512 in step 606. The gouging torch system 100 determines one or both of a first torch speed 210 and a first torch angle 120, and optionally further determines a first torch height 110, a first torch amperage, a first torch consumable selection, and a first torch pressure. Process 600 continues by determining second operating parameters for the plasma arc gouging torch 102 for a second gouging path 514 based at least on the gouge profile 502 and the first gouging path 512 in step 608. The gouging torch system 100 determines one or both of a second torch speed 210and second torch angle 120, and optionally further determines a second torch height 110, a second torch amperage, a second torch pressure, a second torch consumable selection, and/or a torch offset relative to the first gouging path 512. In some embodiments, the first gouging path 512 and the second gouging path 514 are located on substantially the same plane and are oriented substantially parallel to one another.

Process 600 finishes by using the first or second operating parameters to process the workpiece 104 with the plasma arc gouging torch 102 in step 610. For example, processor 430 can set the first or second operating parameters of the plasma arc gouging torch 102 before the gouging torch system 100 processes the workpiece 104 to produce a gouge 106. At least one of the second operating parameters are different than at least one of the first operating parameters. The second torch speed 210 of the second gouging path 514 may be greater than the first torch speed 130 of the first gouging path 512. For example, the second torch speed 210 of the second gouging path 514 can be about 5% greater than the first torch speed 210 of the first gouging path 512. In some embodiments, the second torch speed 210 of the second gouging path 514 is between 5% and 80% greater than the first torch speed 210 of the first gouging path 512.

In some embodiments, process 600 continues by determining third operating parameters for a third gouging path located at a depth below a depth of an initial layer 510 of the gouge profile based at least on the gouge profile 502, the first gouging path 512, and the second gouging path 514. For example, gouging torch system 100 can determine third operating parameters for first gouging path 522 of second gouging layer 520 based on the gouge profile 502, the first gouging path 512, and/or the second gouging path 514. In some embodiments, a third torch speed 210 of the third gouging path is less than a first torch speed 210 of the first gouging path 512 and a second torch speed 210 of the second gouging path 514.

In some embodiments, process 600 continues by determining fourth operating parameters for a fourth gouging path located at a depth of a last layer of the gouge profile based at least on the gouge profile 502, the first gouging path 512, the second gouging path 514, and/or the third gouging path. For example, gouging torch system 100 can determine fourth operating parameters for the path of the last gouging layer based on the gouge profile 502, the first gouging path 512, the second gouging path 514, and/or first gouging path 522 of second gouging layer 520. In some embodiments, a fourth torch speed 210 of the fourth gouging path is greater than a third torch speed 210 of the third gouging path. For example, the torch speed 210 of the path of the last gouging layer can be greater than torch speed 210 of the first gouging path 522 of the second gouging layer 520.

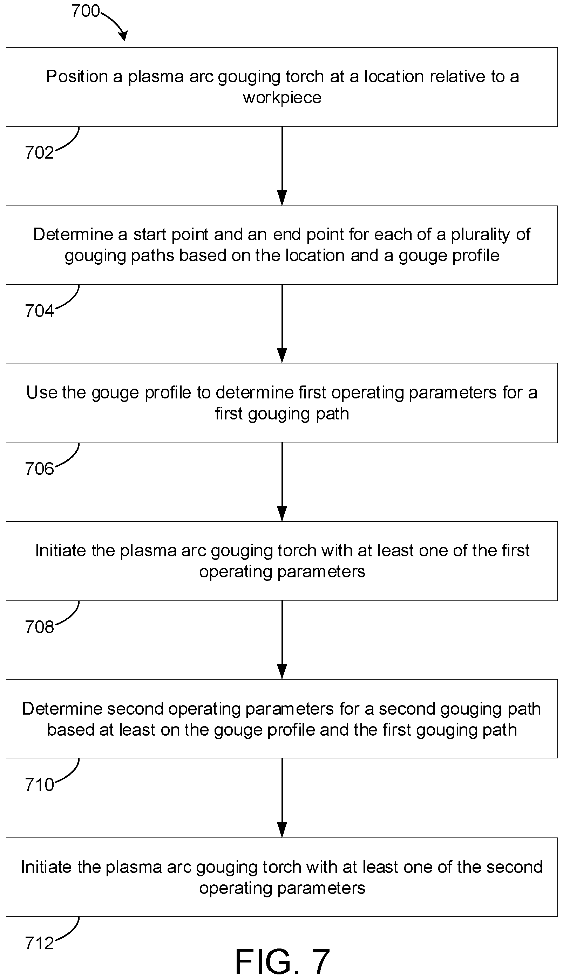

Referring to FIG. 7, a process 700 for determining operating parameters to process a workpiece 104 using a gouging torch system 100 comprising a plasma arc gouging torch 102 is illustrated. The process 700 begins by positioning a plasma arc gouging torch 102 at a location relative to a workpiece 104 in step 702. For example, the plasma arc gouging torch 102 can be positioned near the location of a desired gouge 106 on the workpiece 104. Process 700 continues by determining a start point and an end point for each of a plurality of gouging paths based on the location and a gouge profile 502 in step 704. For example, the gouging torch system 100 can determine a start point and an end point for a first gouging path 512 and a start point and an end point for each subsequent path 514. In some embodiments, processor 430 of the gouging torch system 100 calculates the start point and the end point for each of the gouging paths based on the location and the gouge profile 502.

Process 700 continues by using the gouge profile 502 to determine first operating parameters for a first gouging path 512 in step 706The gouging torch system 100 determines one or both of a first torch speed 210 and a first torch angle 120, and optionally a first torch height 110, a first torch amperage, a first torch consumable selection, and a first torch pressure. Process 700 continues by initiating the plasma arc gouging torch 102 with at least one of the first operating parameters in step 708. For example, processor 430 can set the first operating parameters as the operating parameters of the plasma arc gouging torch 102 before the gouging torch system 100 processes the workpiece 104 to produce a gouge 106. Process 700 continues by determining second operating parameters for a second gouging path 514 based at least on the gouge profile 502 and the first gouging path 512 in step 710. The gouging torch system 100 determines one or both of a second torch speed 210 and a second torch angle 120, and optionally a second torch height 110, a second torch amperage, a second torch pressure, a torch consumable selection, and a torch offset relative to the first gouging path 512. In some embodiments, the torch offset is more than 50% of a width 220 of the first gouging path 512.

Process 700 finishes by initiating the plasma arc gouging torch 102 with at least one of the second operating parameters in step 712. For example, processor 430 can set the second operating parameters as the operating parameters of the plasma arc gouging torch 102 before the gouging torch system 100 processes the workpiece 104 to produce a gouge 106. At least one of the second operating parameters are different than at least one of the first operating parameters. For example, in some embodiments, a second torch speed 210 of the second gouging path 514 is greater than a first torch speed 210 of the first gouging path 512. For example, the second torch speed 210 of the second gouging path 514 can be about 5% greater than the first torch speed 210 of the first gouging path 512. In some embodiments, the second torch speed 210 of the second gouging path 514 is between about 5% and about 80% greater than the first torch speed 210 of the first gouging path 514.

In some embodiments, process 700 continues by determining third operating parameters for a third gouging path located at a depth below a depth of an initial layer 510 of the gouge profile based at least on the gouge profile 502, the first gouging path 512, and the second gouging path 514. For example, gouging torch system 100 can determine third operating parameters for first gouging path 522 of second gouging layer 520 based on the gouge profile 502, the first gouging path 512, and the second gouging path 514. In some embodiments, a third torch speed 210 of the third gouging path is less than a first torch speed 210 of the first gouging path 512 and a second torch speed 210 of the second gouging path 514.

In some embodiments, process 700 continues by determining fourth operating parameters for a fourth gouging path located at a depth of a last layer of the gouge profile based at least on the gouge profile 502, the first gouging path 512, the second gouging path 514, and the third gouging path. For example, gouging torch system 100 can determine fourth operating parameters for the path of the last gouging layer based on the gouge profile 502, the first gouging path 512, the second gouging path 514, and first gouging path 522 of second gouging layer 520 (the third gouging path). In some embodiments, a fourth torch speed 210 of the fourth gouging path is greater than a third torch speed 210 of the third gouging path. For example, the torch speed 210 of the path of the last gouging layer can be greater than torch speed 210 of the first gouging path 522 of the second gouging layer 520.

In other embodiments, torch angularity between passes can be used in place of or in conjunction with the above discussed speed adjustments/variations between passes to achieve the desired gouge profile. In other embodiments, current adjustments between passes, pressure adjustments between passes, offset adjustments between passes, consumable selection changes between passes, etc. can be used in conjunction with the above discussed speed adjustments/variations between passes to achieve the desired gouge profile.

In addition to the multi-path gouging processes described above in relation to FIGS. 6 and 7, in another aspect the gouging torch system 100 performs a gouge 106 using a single pass of the gouging torch 102 by varying the lateral velocity 212 of the plasma arc gouging torch 102. This type of single pass is known as a weaving gouge because the gouging torch 102 adjusts its lateral velocity 212 while having a substantially constant axial velocity 210. This lateral motion in conjunction with axial motion creating a wider gouge in a single path via the lateral accelerations and decelerations of the torch across a width of the desired gouge profile 502. A desired gouge profile 502 is achieved by varying the lateral velocity 212 from a minimum near the center line 202 to a maximum near the gouge extremes 204. The axial velocity 210 and lateral velocity 212 can be calculated from known and/or desired quantities. For example, the substantially constant axial velocity 210 of a weaving gouge can be calculated using: $Axial Velocity = \frac{Metal Removal Rate}{Gouge XS Area ∗ Metal Density}$ where,
Metal Removal Rate is nearly constant and can be measured or calculated from a single pass;
Metal Density is a known constant that is determined from the metal properties; and
Gouge XS Area is the known cross-sectional area of the desired gouge profile 502.

The Metal Removal Rate can be measured as a function of speed from a single pass and is equal to the product of the speed of the single pass, the cross-sectional area of the single pass, and the Metal Density. The speed profile or lateral velocity 212 at a given point can be determined from the maximum gouge depth desired from the gouge profile 502 and a maximum lateral velocity achievable using the gouging torch system 100 (e.g., system capabilities). The maximum lateral velocity can be determined by system capabilities and can correspond to the lateral velocity 212 at the location of the gouge 106 with the minimum gouge depth 208. Often, the minimum gouge depth 208 is near the edge of the desired gouge profile 502. The maximum lateral velocity cannot be greater than the maximum lateral velocity achievable using the gouging torch system 100. A depth ratio at a specific location (x) of the gouge 106 can be calculated along the width of the gouge 106 using: $Depth Ratio \left(x\right) = \frac{Desired Depth \left(x\right)}{Minimum Gouge Depth}$ where,
Desired Depth (x) is the desired depth at a distance x from the center line 202 based on the desired gouge profile 502; and
Minimum Gouge Depth is the minimum gouge depth desired based on the desired gouge profile 502.

Once the depth ratio is calculated along the width of the gouge 106, a speed ratio can be determined along the width (e.g., between lateral extremes/extents/bounds) of the gouge 106 as well. The speed ratio is inversely proportional to the depth ratio, and can be determined from a speed-depth table. The speed-depth table can be generated by setting the maximum transverse velocity to correspond to the minimum gouge depth. Table 1 below is an example speed-depth table:

**Table 1**

| Speed cm/s (IPM) | Speed Ratio | Depth cm (in) | Depth Ratio |
|---|---|---|---|
| 0.84 (20) | 0.4 | 0.97 (0.38) | 1.9 |
| 1.06 (25) | 0.5 | 0.79 (0.31) | 1.55 |
| 1.27 (30) | 0.6 | 0.71 (0.28) | 1.4 |
| 1.48 (35) | 0.7 | 0.64 (0.25) | 1.25 |
| 1.69 (40) | 0.8 | 0.59 (0.22) | 1.1 |
| 1.91 (45) | 0.9 | 0.54 (0.21) | 1.05 |
| 2.12 (50) | 1 | 0.51 (0.2) | 1 |

Once the speed ratio along the width of the gouge 106 is determined, the lateral velocity at a specific location (x) of the gouge 106 can be calculated along the width of the gouge 106 using: $Lateral Velocity \left(x\right) = Maximum Lateral Velocity ∗ Speed Ratio \left(x\right)$ where,
Maximum Lateral Velocity is a constant and corresponds to the maximum lateral velocity achievable using the gouging torch system 100. Calculation of the lateral velocities at specific locations along the width of the gouge 106 yields a velocity and/or acceleration profile to achieve the desired gouge profile shape. As the system sets the torch path with an axial velocity 210 and a lateral velocity 212 in accordance with these profiles, in some embodiments the tip of the gouging torch 102 is set to not reach either of the lateral extremes of the width of the desired gouge profile 502 so as to not gouge the workpiece outside of the desired gouge path and to maintain the desired minimum gouge depth 208. In some embodiments the tip of the gouging torch 102 is limited in lateral direction movements to coming within an arc distance 206 of the lateral edges of the gouge 106.

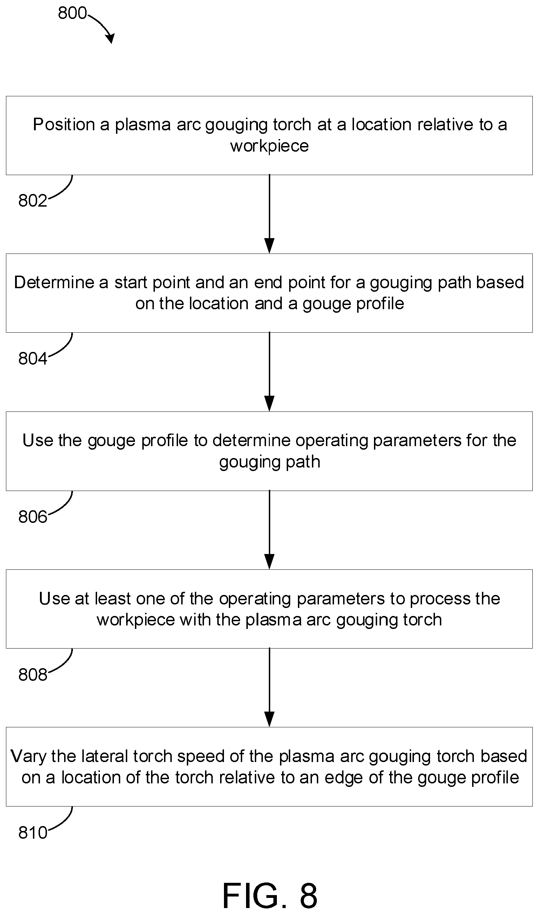

Referring to FIG. 8, a process 800 for determining operating parameters to process a workpiece 104 using a gouging torch system 100 comprising a plasma arc gouging torch 102 is illustrated. The process 800 begins by positioning a plasma arc gouging torch 102 at a location relative to a workpiece 104 in step 802. For example, the plasma arc gouging torch 102 can be positioned near the location of a desired gouge 106 on the workpiece 104. Process 800 continues by determining a start point and an end point for a gouging path based on the location and a gouge profile 502 in step 804. For example, the gouging torch system 100 can determine a start point and an end point for a first gouging path 512. In some embodiments, processor 430 of the gouging torch system 100 calculates the start point and the end point for a plurality of gouging paths based on the location and the gouge profile 502.

Process 800 continues by using the gouge profile 502 to determine a plurality of operating parameters for the gouging path 512 in step 806. The plurality of operating parameters comprises varying a lateral torch speed 212 of the plasma arc gouging torch 102 while performing a pass over the gouging path 512. For example, gouging torch system 100 can further determine at least one of a torch angle 120, a torch height 110, a torch amperage, and a torch pressure. Process 800 continues by using at least the lateral torch speed to process the workpiece 104 with the plasma arc gouging torch 102 in step 808. For example, processor 430 can set the operating parameters of the plasma arc gouging torch 102 before the gouging torch system 100 processes the workpiece 104 to produce a gouge 106.

Process 800 finishes by varying the lateral torch speed 212 of the plasma arc gouging torch 102 based on a location of the torch 102 relative to an edge of the gouge profile 502 in step 810. The lateral torch speed 212 is a function of a depth 208 of the gouge path 512 at the location. In some embodiments, the lateral torch speed 212 is proportional to a depth 208 of the gouge path 512 at the location. In some embodiments, an axial torch speed 210 of the plasma arc gouging torch 102 is constant. In other embodiments, a ratio of the lateral torch speed 212 and the axial torch speed 210 varies based on the location of the torch relative to the edge of the gouge profile 502. For example, the ratio of the lateral torch speed 212 and the axial torch speed 210 can be a maximum ratio when a distance between the location of the torch 102 and the edge of the gouge profile 502 is a minimum distance. In some embodiments, the maximum ratio is about 4. In some embodiments, the lateral torch speed 212 is based on a material removal rate. In some embodiments, the axial speed of the torch 210 is varied along with the lateral speed of the torch 212 so as to influence/achieve the desired gouge profile shape. These variations of the axial speed of the torch 210 based in part on a position of the torch 102 relative to the gouge 106 and/or workpiece 104.

The systems and methods described herein provide a number of benefits over the current state of the art, the advantages including: enables the application of plasma gouging for full penetration weld processing; provides an automated solution which removes the trial and error processes currently required by end users to achieve specific gouge profiles; reduces secondary work normally required on large gouges; creates a standardized process for producing specific/finely shaped gouges without the need for a highly sophisticated operator.

The above-described techniques can be implemented in digital and/or analog electronic circuitry, or in computer hardware, firmware, software, or in combinations of them.
The implementation can be as a computer program product, i.e., a computer program tangibly embodied in a machine-readable storage device, for execution by, or to control the operation of, a data processing apparatus, e.g., a programmable processor, a computer, and/or multiple computers. A computer program can be written in any form of computer or programming language, including source code, compiled code, interpreted code and/or machine code, and the computer program can be deployed in any form, including as a stand-alone program or as a subroutine, element, or other unit suitable for use in a computing environment. A computer program can be deployed to be executed on one programmable processor or on multiple programmable processors.

Processor 430 can perform the above-described method steps by executing a computer program to perform functions of the invention by operating on input data and/or generating output data. Method steps can also be performed by, and an apparatus can be implemented as, special purpose logic circuitry, e.g., a FPGA (field programmable gate array), a FPAA (field-programmable analog array), a CPLD (complex programmable logic device), a PSoC (Programmable System-on-Chip), ASIP (application-specific instruction-set processor), or an ASIC (application-specific integrated circuit), or the like. Subroutines can refer to portions of the stored computer program and/or the processor, and/or the special circuitry that implement one or more functions.

Processor 430 may include, by way of example, special purpose microprocessors specifically programmed with instructions executable to perform the methods described herein, and any one or more processors of any kind of digital or analog computer. Generally, a processor receives instructions and data from a read-only memory or a random access memory or both. The essential elements of a computer are a processor for executing instructions and one or more memory devices for storing instructions and/or data. Memory device 440 can be used to temporarily store data, such as a cache. Memory device 440 can also be used for long-term data storage. Computer- readable storage mediums suitable for embodying computer program instructions and data include all forms of volatile and non-volatile memory, including by way of example semiconductor memory devices, e.g., DRAM, SRAM, EPROM, EEPROM, and flash memory devices; magnetic disks, e.g., internal hard disks or removable disks; magneto-optical disks; and optical disks, e.g., CD, DVD, HD-DVD, and Blu-ray disks. The processor and the memory can be supplemented by and/or incorporated in special purpose logic circuitry.

The components of the gouging torch system 100 can be interconnected by communication circuitry 420 using transmission medium, which can include any form or medium of digital or analog data communication (e.g., a communication network). Transmission medium can include one or more packet-based networks and/or one or more circuit-based networks in any configuration. Packet-based networks can include, for example, the Internet, a carrier internet protocol (IP) network (e.g., local area network (LAN), wide area network (WAN), campus area network (CAN), metropolitan area network (MAN), home area network (HAN)), a private IP network, an IP private branch exchange (IPBX), a wireless network (e.g., radio access network (RAN), Bluetooth, near field communications (NFC) network, Wi-Fi, WiMAX, general packet radio service (GPRS) network, HiperLAN), and/or other packet-based networks. Circuit-based networks can include, for example, the public switched telephone network (PSTN), a legacy private branch exchange (PBX), a wireless network (e.g., RAN, code-division multiple access (CDMA) network, time division multiple access (TDMA) network, global system for mobile communications (GSM) network), and/or other circuit-based networks.

Communication circuitry 420 can use one or more communication protocols to transfer information over transmission medium. Communication protocols can include, for example, Ethernet protocol, Internet Protocol (IP), Voice over IP (VOiP), a Peer-to-Peer (P2P) protocol, Hypertext Transfer Protocol (HTTP), Session Initiation Protocol (SIP), H.323, Media Gateway Control Protocol (MGCP), Signaling System #7 (SS7), a Global System for Mobile Communications (GSM) protocol, a Push-to-Talk (PTT) protocol, a PTT over Cellular (POC) protocol, Universal Mobile Telecommunications System (UMTS), 3GPP Long Term Evolution (LTE) and/or other communication protocols.

## Claims

1. A method (600) for determining a plurality of operating parameters to process a workpiece (104) using a manufacturing processing system comprising a plasma arc gouging torch (102), the method comprising:
positioning (602) a plasma arc gouging torch (102) at a location relative to a workpiece (104);
the method (600) being **characterised by** the following steps:
determining (604) a start point and an end point for each of a plurality of gouging paths based on the location and a gouge profile (502), the plurality of paths including a first path and a second path, the second path being laterally offset with respect to the first path;
using the gouge profile (502) to determine (606) first operating parameters for the plasma arc gouging torch (102) for the first gouging path (512);
determining (608) second operating parameters for the plasma arc gouging torch (102) for the second gouging path (514) based at least on the gouge profile (502) and the first gouging path (512), wherein:
a) the first operating parameters comprise a first torch angle between the torch (102) and the workpiece and the second operating parameters comprise a second torch angle between the torch (102) and the workpiece (104), the first and second torch angle being in a direction of torch travel and the first torch angle being different from the second torch angle; and/or
b) the first operating parameters comprise a first axial velocity (210) of the torch with respect to the workpiece and the second operating parameters comprise a second axial velocity (210) of the torch with respect to the workpiece, the first axial velocity being different from the second axial velocity; and
using (610) the first and second operating parameters to process the workpiece (104) with the plasma arc gouging torch (102).

2. The method of claim 1, wherein the first gouging path (512) and the second gouging path (514) are located on substantially a same plane and are oriented substantially parallel to one another.

3. The method of claim 1, wherein the first operating parameters comprise at least one of a first torch height, a first torch amperage, or a first torch pressure, and the second operating parameters comprise at least one of a second torch height, a second torch amperage, or a second torch pressure.

4. The method of claim 3, wherein the second torch speed of the second gouging path (514) is greater than the first torch speed of the first gouging path (512),
wherein optionally (i) the second torch speed of the second gouging path (514) is about 5% greater than the first torch speed of the first gouging path (512); or
(ii) the second torch speed of the second gouging path (514) is between about 5% and 80% greater than the first torch speed of the first gouging path (512).

5. The method of claim 1, further comprising:
determining third operating parameters for a third gouging path of the plurality of gouging paths based at least on the gouge profile, the first gouging path, and the second gouging path,
wherein a portion of the third gouging path is located at a depth below a depth of an initial layer of the gouge profile.

6. The method of claim 5, wherein one of the following applies,
a) a third torch speed of the third gouging path (522) is less than a first torch speed of the first gouging path (512) and a second torch speed of the second gouging path (514); or
b) the method further comprising:
determining fourth operating parameters for a fourth gouging path (532) of the plurality of gouging paths based at least on the gouge profile, the first gouging path (512), the second gouging path (514), and the third gouging path (522),
wherein the fourth gouging path (532) is located at a depth of a last layer (530) of the gouge profile (502),
wherein optionally a fourth torch speed of the fourth gouging path (532) is greater than a third torch speed of the third gouging path (522).

7. The method of any preceding claim, wherein:
determining (604) a start point and an end point for each of a plurality of gouging paths based on the location and a gouge profile (502) comprises calculating (704) a start point and an end point for each of a plurality of gouging paths based on the location and a gouge profile (502); and
using (610) the first or second operating parameters to process the workpiece (104) with the plasma arc gouging torch (102) comprises:
initiating (708) the plasma arc gouging torch with at least one of the first operating parameters; and
initiating (712) the plasma arc gouging torch (102) with at least one of the second operating parameters.

8. The method of claim 1, wherein the first operating parameters and the second operating parameters further comprise at least one of a torch height, a torch amperage, or a torch pressure.

9. The method of claim 8, wherein one of the following applies,
a) the torch offset is more than 50% of a width of the first gouging path (512); or
b) a second torch speed of the second gouging path (514) is greater than a first torch speed of the first gouging path (512),
wherein optionally (i) the second torch speed of the second gouging path (514) is about 5% greater than the first torch speed of the first gouging path (512); or
(ii) the second torch speed of the second gouging path (514) is between about 5% and 80% greater than the first torch speed of the first gouging path.

10. A method (800) for determining a plurality of operating parameters to process a workpiece (104) using a manufacturing processing system comprising a plasma arc gouging torch (102), the method comprising:
positioning (802) a plasma arc gouging torch (102) at a location relative to a workpiece;
the method (800) being **characterised by** the following steps:
determining (804) a start point and an end point for a gouging path (106) based on the location and a gouge profile;
using (806) the gouge profile to determine a plurality of operating parameters for the gouging path (106), wherein the plurality of operating parameters comprises varying a lateral torch speed of the plasma arc gouging torch (102) while performing a pass over the gouging path (106);
using (808) at least one of the plurality of operating parameters to process the workpiece (104) with the plasma arc gouging torch (102); and
varying (810) the lateral torch speed of the plasma arc gouging torch (102) based on a location of the torch relative to an edge of the gouge profile such that a speed ratio is inversely proportional to the depth ratio, wherein the depth ratio is, at a specific location of the gouge (106), calculated along the width of the gouge (106) using the following formula : Desired Depth (x) / Minimum Gouge Depth, wherein the Desired Depth (x) is the desired depth at a distance x from the center line (202) based on the desired gouge profile (502), and the Minimum Gouge Depth is the minimum gouge depth desired based on the desired gouge profile (502), and
wherein the lateral torch speed is also a function of a depth of the gouge path at the location.

11. The method of claim 10, wherein one of the following applies,
a) the plurality of operating parameters further comprises at least one of a torch angle, a torch height, a torch amperage, or a torch pressure;
b) an axial torch speed of the plasma arc gouging torch (102) is constant,
wherein optionally a ratio of the lateral torch speed and the axial torch speed varies based on the location of the torch relative to the edge of the gouge profile,
wherein more optionally the ratio of the lateral torch speed and the axial torch speed is a maximum ratio and a distance between the location of the torch and the edge of the gouge profile is a minimum distance,
wherein more optionally the maximum ratio is about 4; and
c) the lateral torch speed is based on a material removal rate.

12. The method of claim 10 or claim 11, wherein the lateral speed at a specific location (x) of the gouge (106) is calculated using: Lateral Speed (x) = Maximum Lateral Speed * Speed ratio (x) where the Maximum Lateral Speed is a constant and corresponds to the maximum lateral speed achievable using the gouging torch system.

## Patentansprüche

1. Verfahren (600) zur Bestimmung einer Vielzahl von Betriebsparametern zur Bearbeitung eines Werkstücks (104) unter Verwendung eines Fertigungsbearbeitungssystems, das einen Plasmalichtbogen-Fugbrenner (102) umfasst, wobei das Verfahren Folgendes umfasst:
Positionieren (602) eines Plasmalichtbogen-Fugbrenners (102) an einem Ort relativ zu einem Werkstück (104);
wobei das Verfahren (600) durch die folgenden Schritte gekennzeichnet ist:
Bestimmen (604) eines Startpunkts und eines Endpunkts für jeden einer Vielzahl von Fugbahnen auf der Grundlage des Ortes und eines Fugprofils (502), wobei die Vielzahl von Bahnen eine erste Bahn und eine zweite Bahn umfasst, wobei die zweite Bahn relativ zur ersten Bahn seitlich versetzt ist;
Verwenden des Fugprofils (502) zur Bestimmung (606) erster Betriebsparameter für den Plasmalichtbogen-Fugbrenner (102) für die erste Fugbahn (512);
Bestimmen (608) zweiter Betriebsparameter für den Plasmalichtbogen-Fugbrenner (102) für die zweite Fugbahn (514) basierend zumindest auf dem Fugprofil (502) und der ersten Fugbahn (512), wobei:
a) die ersten Betriebsparameter einen ersten Brennerwinkel zwischen dem Brenner (102) und dem Werkstück umfassen und die zweiten Betriebsparameter einen zweiten Brennerwinkel zwischen dem Brenner (102) und dem Werkstück (104) umfassen, wobei der erste und der zweite Brennerwinkel in Richtung der Brennerbewegung liegen und sich der erste Brennerwinkel vom zweiten Brennerwinkel unterscheidet; und/oder
b) die ersten Betriebsparameter eine erste Axialgeschwindigkeit (210) des Brenners relativ zum Werkstück umfassen und die zweiten Betriebsparameter eine zweite Axialgeschwindigkeit (210) des Brenners relativ zum Werkstück umfassen, wobei sich die erste Axialgeschwindigkeit von der zweiten Axialgeschwindigkeit unterscheidet; und
Verwenden (610) der ersten und zweiten Betriebsparameter, um das Werkstück (104) mit dem Plasma-Fugbrenner (102) zu bearbeiten.

2. Verfahren nach Anspruch 1, wobei die erste Fugbahn (512) und die zweite Fugbahn (514) im Wesentlichen in derselben Ebene liegen und im Wesentlichen parallel zueinander verlaufen.

3. Verfahren nach Anspruch 1, wobei die ersten Betriebsparameter mindestens eine der folgenden umfassen: erste Brennerhöhe, erste Brennerstromstärke oder erster Brennerdruck, und die zweiten Betriebsparameter mindestens eine der folgenden Größen umfassen: zweite Brennerhöhe, zweite Brennerstromstärke oder zweiter Brennerdruck.

4. Verfahren nach Anspruch 3, wobei die zweite Brennergeschwindigkeit der zweiten Fugbahn (514) größer ist als die erste Brennergeschwindigkeit der ersten Fugbahn (512),
wobei optional (i) die zweite Brennergeschwindigkeit der zweiten Fugbahn (514) etwa 5 % größer ist als die erste Brennergeschwindigkeit der ersten Fugbahn (512); oder
(ii) die zweite Brennergeschwindigkeit der zweiten Fugbahn (514) zwischen etwa 5 % und 80 % größer ist als die erste Brennergeschwindigkeit der ersten Fugbahn (512).

5. Verfahren nach Anspruch 1, ferner umfassend:
Bestimmen dritter Betriebsparameter für eine dritte Fugbahn der Vielzahl von Fugbahnen, basierend zumindest auf dem Fugprofil, der ersten Fugbahn und der zweiten Fugbahn,
wobei ein Abschnitt der dritten Fugbahn in einer Tiefe unterhalb einer Tiefe einer Anfangsschicht des Fugprofils liegt.

6. Verfahren nach Anspruch 5, wobei eine der folgenden zutrifft:
a) eine dritte Brennergeschwindigkeit der dritten Fugbahn (522) ist geringer als eine erste Brennergeschwindigkeit der ersten Fugbahn (512) und eine zweite Brennergeschwindigkeit der zweiten Fugbahn (514); oder
b) das Verfahren ferner Folgendes umfasst:
Bestimmen vierter Betriebsparameter für eine vierte Fugbahn (532) der Vielzahl von Fugbahnen, basierend zumindest auf dem Fugprofil, der ersten Fugbahn (512), der zweiten Fugbahn (514) und der dritten Fugbahn (522),
wobei die vierte Fugbahn (532) in einer Tiefe einer letzten Schicht (530) des Fugprofils (502) liegt,
wobei optional eine vierte Brennergeschwindigkeit der vierten Fugbahn (532) größer ist als eine dritte Brennergeschwindigkeit der dritten Fugbahn (522).

7. Verfahren nach einem der vorstehenden Ansprüche, wobei:
das Bestimmen (604) eines Startpunkts und eines Endpunkts für jeden einer Vielzahl von Fugbahnen auf der Grundlage der Position und eines Fugprofils (502) das Berechnen (704) eines Startpunkts und eines Endpunkts für jeden einer Vielzahl von Fugbahnen auf der Grundlage der Position und eines Fugprofils (502) umfasst; und
das Verwenden (610) der ersten oder zweiten Betriebsparameter zur Bearbeitung des Werkstücks (104) mit dem Plasmafugbrenner (102) Folgendes umfasst:
Zünden (708) des Plasmafugbrenners mit mindestens einem der ersten Betriebsparameter; und
Zünden (712) des Plasmafugbrenners (102) mit mindestens einem der zweiten Betriebsparameter.

8. Verfahren nach Anspruch 1, wobei die ersten Betriebsparameter und die zweiten Betriebsparameter ferner mindestens eines von einer Brennerhöhe, einer Brennerstromstärke oder einem Brennerdruck umfassen.

9. Verfahren nach Anspruch 8, wobei eine der folgenden zutrifft:
a) der Brennerversatz beträgt mehr als 50 % einer Breite der ersten Fugbahn (512); oder
b) eine zweite Brennergeschwindigkeit der zweiten Fugbahn (514) ist größer als eine erste Brennergeschwindigkeit der ersten Fugbahn (512),
wobei optional (i) die zweite Brennergeschwindigkeit der zweiten Fugbahn (514) etwa 5 % größer ist als die erste Brennergeschwindigkeit der ersten Fugbahn (512); oder
(ii) die zweite Brennergeschwindigkeit der zweiten Fugbahn (514) zwischen etwa 5 % und 80 % größer ist als die erste Brennergeschwindigkeit der ersten Fugbahn.

10. Ein Verfahren (800) zur Bestimmung einer Vielzahl von Betriebsparametern zur Bearbeitung eines Werkstücks (104) unter Verwendung eines Fertigungsbearbeitungssystems, das einen Plasmalichtbogen-Fugbrenner (102) umfasst, wobei das Verfahren Folgendes umfasst:
Positionieren (802) eines Plasmalichtbogen-Fugbrenners (102) an einem Ort relativ zu einem Werkstück;
wobei das Verfahren (800) durch die folgenden Schritte gekennzeichnet ist:
Bestimmen (804) eines Startpunkts und eines Endpunkts für eine Fugbahn (106) basierend auf dem Ort und einem Fugprofil;
Verwenden (806) des Fugprofils zur Bestimmung einer Vielzahl von Betriebsparametern für die Fugbahn (106), wobei die Vielzahl von Betriebsparametern das Variieren einer seitlichen Brennergeschwindigkeit des Plasmalichtbogen-Fugbrenners (102) während der Durchführung eines Durchgangs über die Fugbahn (106) umfasst;
Verwenden (808) von mindestens einem der Vielzahl von Betriebsparametern, um das Werkstück (104) mit dem Plasmalichtbogen-Fugbrenner (102) zu bearbeiten; und
Variieren (810) der seitlichen Brennergeschwindigkeit des Plasmalichtbogen-Fugbrenners (102) basierend auf einer Position des Brenners relativ zu einer Kante des Fugprofils, derart, dass ein Geschwindigkeitsverhältnis umgekehrt proportional zum Tiefenverhältnis ist, wobei das Tiefenverhältnis an einer spezifischen Stelle der Fuge (106) entlang der Breite der Fuge (106) unter Verwendung der folgenden Formel berechnet wird: Solltiefe (x) / Mindestfugtiefe; wobei die Solltiefe (x) die gewünschte Tiefe in einem Abstand x von der Mittellinie (202) basierend auf dem gewünschten Fugprofil (502) ist und die Mindestfugtiefe die basierend auf dem gewünschten Fugprofil (502) gewünschte Mindestfugtiefe ist; und
wobei die seitliche Brennergeschwindigkeit zudem eine Funktion der Tiefe der Fugbahn an der betreffenden Stelle ist.

11. Verfahren nach Anspruch 10, wobei eine der folgenden zutrifft:
a) die Vielzahl von Betriebsparametern ferner mindestens einen der folgenden Parameter umfasst: einen Brennerwinkel, eine Brennerhöhe, eine Brennerstromstärke oder einen Brennerdruck;
b) eine axiale Brennergeschwindigkeit des Plasmalichtbogen-Fugbrenners (102) konstant ist,
wobei optional ein Verhältnis der lateralen Brennergeschwindigkeit zur axialen Brennergeschwindigkeit in Abhängigkeit von der Position des Brenners relativ zur Kante des Fugprofils variiert, wobei noch optionaler das Verhältnis der lateralen Brennergeschwindigkeit zur axialen Brennergeschwindigkeit ein Maximalverhältnis ist und ein Abstand zwischen der Position des Brenners und der Kante des Fugprofils ein Minimalabstand ist,
wobei noch optionaler das Maximalverhältnis etwa 4 beträgt; und
c) die laterale Brennergeschwindigkeit auf einer Materialabtragsrate basiert.

12. Verfahren nach Anspruch 10 oder 11, wobei die laterale Geschwindigkeit an einer bestimmten Stelle (x) der Fuge (106) wie folgt berechnet wird: Laterale Geschwindigkeit (x) = Maximale Laterale Geschwindigkeit * Geschwindigkeitsverhältnis (x), wobei die maximale laterale Geschwindigkeit eine Konstante ist und der maximal erreichbaren lateralen Geschwindigkeit mit dem Fugbrennersystem entspricht.

## Revendications

1. Procédé (600) permettant de déterminer une pluralité de paramètres de fonctionnement pour traiter une pièce à usiner (104) à l'aide d'un système de traitement de fabrication comprenant une torche de gougeage à arc plasma (102), le procédé comprenant :
le positionnement (602) d'une torche de gougeage à arc plasma (102) au niveau d'un emplacement par rapport à une pièce à usiner (104) ;
le procédé (600) étant **caractérisé par** les étapes suivantes :
la détermination (604) d'un point de départ et d'un point d'arrivée pour chacune d'une pluralité de trajectoires de gougeage en fonction de l'emplacement et d'un profil de gouge (502), la pluralité de trajectoires comportant une première trajectoire et une deuxième trajectoire, la deuxième trajectoire étant décalée latéralement par rapport à la premier trajectoire ;
l'utilisation du profil de gouge (502) pour déterminer (606) les premiers paramètres de fonctionnement de la torche de gougeage à arc plasma (102) pour la première trajectoire de gougeage (512) ;
la détermination (608) des deuxièmes paramètres de fonctionnement pour la torche de gougeage à arc plasma (102) en vue de la deuxième trajectoire de gougeage (514), en fonction au moins du profil de gouge (502) et de la première trajectoire de gougeage (512), dans lequel :
a) les premiers paramètres de fonctionnement comprennent un premier angle de torche entre la torche (102) et la pièce à usiner, et les deuxièmes paramètres de fonctionnement comprennent un second angle de torche entre la torche (102) et la pièce à usiner (104), les premier et second angles de torche étant dans une direction de déplacement de la torche et le premier angle de torche étant différent du second angle de torche ; et/ou
b) les premiers paramètres de fonctionnement comprennent une première vitesse axiale (210) de la torche par rapport à la pièce à usiner et les deuxièmes paramètres de fonctionnement comprennent une seconde vitesse axiale (210) de la torche par rapport à la pièce à usiner, la première vitesse axiale étant différente de la seconde vitesse axiale ; et
l'utilisation (610) des premiers et deuxièmes paramètres de fonctionnement pour traiter la pièce à usiner (104) avec la torche de gougeage à arc plasma (102).

2. Procédé selon la revendication 1, dans lequel le premier tracé de gougeage (512) et le deuxième tracé de gougeage (514) sont situés sensiblement sur un même plan et sont orientés sensiblement parallèlement l'un à l'autre.

3. Procédé selon la revendication 1, dans lequel les premiers paramètres de fonctionnement comprennent au moins l'une parmi une première hauteur de torche, une première intensité du courant de torche ou une première pression de torche, et les deuxièmes paramètres de fonctionnement comprennent au moins l'une parmi une seconde hauteur de torche, une seconde intensité du courant de torche ou une seconde pression de torche.

4. Procédé selon la revendication 3, dans lequel la seconde vitesse de la torche sur la deuxième trajectoire de gougeage (514) est supérieure à la première vitesse de la torche sur la première trajectoire de gougeage (512),
dans lequel, éventuellement, (i) la seconde vitesse de la torche sur la deuxième trajectoire de gougeage (514) est supérieure d'environ 5 % à la première vitesse de la torche sur la première trajectoire de gougeage (512) ; ou
(ii) la vitesse de la torche sur la deuxième trajectoire de gougeage (514) est supérieure entre environ 5 % et 80 % à la première vitesse de la torche sur la première trajectoire de gougeage (512).

5. Procédé selon la revendication 1, comprenant en outre :
la détermination des troisièmes paramètres de fonctionnement pour une troisième trajectoire de gougeage parmi la pluralité de trajectoires de gougeage, en fonction au moins du profil de gouge, de la première trajectoire de gougeage et de la deuxième trajectoire de gougeage,
dans lequel une partie de la troisième trajectoire de gougeage se situe à une profondeur inférieure à une profondeur d'une couche initiale du profil de gouge.

6. Procédé selon la revendication 5, dans lequel l'une des conditions suivantes s'applique,
a) une troisième vitesse de la torche sur la troisième trajectoire de gougeage (522) est inférieure à une première vitesse de la torche sur la première trajectoire de gougeage (512) et à une deuxième vitesse de la torche sur la deuxième trajectoire de gougeage (514) ;
ou
b) le procédé comprenant en outre :
la détermination des quatrièmes paramètres de fonctionnement pour une quatrième trajectoire de gougeage (532) parmi la pluralité de trajectoires de gougeage, en fonction au moins du profil de gouge, de la première trajectoire de gougeage (512), de la deuxième trajectoire de gougeage (514) et de la troisième trajectoire de gougeage (522),
dans lequel la quatrième trajectoire de gougeage (532) se situe à une profondeur d'une dernière couche (530) du profil de gouge (502),
dans lequel, éventuellement, une quatrième vitesse de la torche sur la quatrième trajectoire de gougeage (532) est supérieure à une troisième vitesse de la torche sur la troisième trajectoire de gougeage (522).

7. Procédé selon l'une quelconque revendication précédente , dans lequel :
la détermination (604) d'un point de départ et d'un point d'arrivée pour chacune d'une pluralité de trajectoires de gougeage en fonction de l'emplacement et d'un profil de gouge (502) comprend le calcul (704) d'un point de départ et d'un point d'arrivée pour chacune d'une pluralité de trajectoires de gougeage en fonction de l'emplacement et d'un profil de gouge (502) ; et
l'utilisation (610) des premiers ou seconds paramètres de fonctionnement pour traiter la pièce à usiner (104) avec la torche de gougeage à arc plasma (102) comprend :
la mise en marche (708) de la torche de gougeage à arc plasma avec au moins l'un des premiers paramètres de fonctionnement ; et
la mise en marche (712) de la torche de gougeage à arc plasma (102) avec au moins l'un des deuxièmes paramètres de fonctionnement.

8. Procédé selon la revendication 1, dans lequel les premiers paramètres de fonctionnement et les deuxièmes paramètres de fonctionnement comprennent en outre au moins l'une parmi une hauteur de torche, une intensité du courant de torche ou une pression de torche.

9. Procédé selon la revendication 8, dans lequel l'une des conditions suivantes s'applique,
a) le décalage de la torche est supérieur à 50 % d'une largeur de la première trajectoire de gougeage (512) ; ou
b) une deuxième vitesse de la torche sur le deuxième tracé de gougeage (514) est supérieure à une première vitesse de la torche sur la première trajectoire de gougeage (512),
dans lequel, éventuellement, (i) la seconde vitesse de la torche sur la deuxième trajectoire de gougeage (514) est supérieure d'environ 5 % à la première vitesse de la torche sur la première trajectoire de gougeage (512) ; ou
(ii) la vitesse de la torche sur la deuxième trajectoire de gougeage (514) est supérieure entre environ 5 % et 80 % à la première vitesse de la torche sur la première trajectoire de gougeage.

10. Procédé (800) permettant de déterminer une pluralité de paramètres de fonctionnement pour traiter une pièce à usiner (104) à l'aide d'un système de traitement de fabrication comprenant une torche de gougeage à arc plasma (102), le procédé comprenant :
le positionnement (802) d'une torche de gougeage à arc plasma (102) au niveau d'un emplacement par rapport à une pièce à usiner ;
le procédé (800) étant **caractérisé par** les étapes suivantes :
la détermination (804) d'un point de départ et d'un point d'arrivée pour une trajectoire de gougeage (106) en fonction de l'emplacement et d'un profil de gouge ;
l'utilisation (806) du profil de gouge pour déterminer une pluralité de paramètres de fonctionnement pour la trajectoire de gougeage (106), dans lequel la pluralité de paramètres de fonctionnement comprennent la variation d'une vitesse latérale de la torche de gougeage à arc plasma (102) lors de la réalisation d'un passage sur la trajectoire de gougeage (106) ;
l'utilisation (808) d'au moins l'un de la pluralité de paramètres de fonctionnement pour traiter la pièce à usiner (104) avec la torche de gougeage à arc plasma (102) ; et
la variation (810) de la vitesse latérale de la torche de gougeage à arc plasma (102) en fonction d'un emplacement de la torche par rapport à un bord du profil de gouge, de telle sorte qu'un rapport de vitesse soit inversement proportionnel au rapport de profondeur, dans lequel le rapport de profondeur est, au niveau d'un emplacement spécifique de la gouge (106), calculé le long de la largeur de la gouge (106) à l'aide de la formule suivante : Profondeur souhaitée (x) / Profondeur minimale de gouge, la profondeur souhaitée (x) étant la profondeur souhaitée à une distance x de la ligne centrale (202) en fonction du profil de gouge souhaité (502), et la profondeur minimale de gouge étant la profondeur minimale de gouge souhaitée en fonction du profil de gouge souhaité (502), et
dans lequel la vitesse latérale de la torche dépend également d'une profondeur de la trajectoire de la gouge au niveau de l'emplacement.

11. Procédé selon la revendication 10, dans lequel l'une des conditions suivantes s'applique,
a) la pluralité de paramètres de fonctionnement comprend en outre au moins l'un parmi un angle de torche, une hauteur de torche, une intensité du courant de torche ou une pression de torche ;
b) une vitesse axiale de torche de la torche de gougeage à arc plasma (102) est constante,
dans lequel, éventuellement, un rapport entre la vitesse latérale de torche et la vitesse axiale de torche varie en fonction de l'emplacement de la torche par rapport au bord du profil de gouge,
dans lequel, plus éventuellement, le rapport entre la vitesse latérale de torche et la vitesse axiale de torche est un rapport maximal et une distance entre l'emplacement de la torche et le bord du profil de gouge est une distance minimale,
dans lequel, plus éventuellement, le rapport maximal est d'environ 4 ; et
c) la vitesse latérale de torche est en fonction d'un taux d'enlèvement de matière.

12. Procédé selon la revendication 10 ou la revendication 11, dans lequel la vitesse latérale en un emplacement spécifique (x) de la gouge (106) est calculée à l'aide de la formule suivante : Vitesse latérale (x) = Vitesse latérale maximale * Rapport de vitesse (x), où la vitesse latérale maximale est une constante et correspond à la vitesse latérale maximale pouvant être atteinte à l'aide du système de torche de gougeage.
